# EUROPEAN PATENT APPLICATION

(11) **EP 2 495 043 A1**
(43) Date of publication of application: **05.09.2012**
(21) Application number: 10826808.7
(22) Date of filing: 28.10.2010
(51) Int. Cl.: B01J 27/224, B01D 53/94, B01J 37/02, F01N 3/10, F01N 3/28

(54) **EXHAUST CLEANER FOR INTERNAL COMBUSTION ENGINE**

(30) Priority: 30.10.2009 JP 2009250402
(71) Applicant: Sumitomo Osaka Cement Co., Ltd., Tokyo 102-8465 (JP); Honda Motor Co., Ltd., Minato-ku Tokyo 107-8556 (JP)
(72) Inventor: TANAKA Masamichi, Tokyo 102-8465 (JP); KISHIMOTO Atsushi, Tokyo 102-8465 (JP); HIROKADO Takao, Tokyo 102-8465 (JP); NEYA Tadashi, Tokyo 102-8465 (JP); ISHIZAKI Keita, Wako-shi Saitama 351-0193 (JP)
(74) Representative: Denjean, Eric
(86) International application number: PCT/JP2010/069157
(87) International publication number: WO 2011/052676

(57) **Abstract**

An object of the present invention is to provide an exhaust emission control device of an internal combustion engine which is used in purification of exhaust gas and achieves both high catalytic activity at low temperature and high durability at high temperature. In an exhaust emission control device of an internal combustion engine of the present invention, a catalyst is disposed in an exhaust path of the internal combustion engine, at least one kind of the catalyst is noble metal supporting silicon carbide particles, and the noble metal supporting silicon carbide particles include a silicon oxide layer in which noble metal particles are supported on a surface of silicon carbide particles having an average primary particle diameter of 0.005 µm or more and 5 µm or less.

## Description

### Technical Field

The present invention relates to an exhaust emission control device of an internal combustion engine which is provided at an exhaust passage of the internal combustion engine and performs purification of exhaust gas, and particularly, to an exhaust emission control device of an internal combustion engine including a catalyst, which effectively purifies carbon monoxide (CO), hydrocarbons, nitrogen oxides (NOx), particulate matter (PM), and like which are included in the exhaust of the internal combustion engine such as an engine, in an exhaust path.
The present invention claims a priority based on Japanese Patent Application No. 2009-250402 filed in Japanese Patent Office on October 30, 2009, and the contents thereof are incorporated herein by reference.

### Background Art

Various substances, which are included in exhaust gas discharged from an engine (internal combustion engine) such as automobiles, are a cause of air pollution, and have generated various environmental problems until now. Thereby, in order to purify the substances which are included in the exhaust gas, an exhaust emission control device which uses a noble metal element as a catalyst is used.
In the exhaust emission control device of the related art, complex oxides such as alumina or perovskite are used as a catalyst carrier, and material that the noble metal particles are supported on the catalyst carrier as the catalyst composition is used as a catalyst. The substances which are included in the exhaust gas contact the catalyst, and therefore, the substances are decomposed and processed (for example, PTL 1).

### Citation List

### Patent Literature

[PTL 1] JP-A-05-4050

### Summary of Invention

### Technical Problem

In general, when the exhaust gas is purified by using the above-described catalyst, heat is required so as to cause a catalytic activity of a noble metal element to be exhibited. However, for example, since there is a need for the catalyst to purify the exhaust gas stably even at low temperature, such as during the time soon after starting the engine, the catalyst which exhibits an efficient purification performance even at low temperature is required.
As the method which obtains the efficient purification performance at low temperature, increasing the amount of the noble metal particles which are the catalyst composition or increasing a contact area (contact probability) between the exhaust gas and the noble metal particles may be considered. However, since almost all of the noble metal elements such as a group 9 element or a group 10 element which has the catalytic activity for purifying the exhaust gas have high costs, the manufacturing costs are increased.
In addition, a configuration is also known in which the noble metal elements are supported on the surface of the particles (carrier particles) such as γ-alumina having a high specific surface area, and composite particles which increase the surface area, which represents the catalytic activity, by expanding the surface area of the noble metal elements are used as the catalyst. However, in the above-described configuration, since the crystalline structure of γ-alumina is transformed to the crystalline structure of α-alumina at a high temperature of 1000°C or more, the specific surface area is considerably decreased. In addition, the structural change due to the crystalline transition to the α-alumina becomes a cause which promotes sintering of the noble metal particles which are the catalyst composition. Moreover, when the catalyst is formed on the substrate in layers, the structural change becomes a cause which generates defects in the formed layer. Thereby, the catalytic activity cannot be maintained at high temperature.

The present invention is made with consideration for the above-described problems, and an object thereof is to provide an exhaust emission control device of an internal combustion engine which achieves both high catalytic activity at low temperature and high durability at high temperature.

### Solution to Problem

In order to solve the above-described problems, in an exhaust emission control device of an internal combustion engine of the present invention, a catalyst is disposed in an exhaust path of the internal combustion engine, at least one kind of the catalyst is noble metal supporting silicon carbide particles, and the noble metal supporting silicon carbide particles include a silicon oxide layer in which noble metal particles are supported on a surface of silicon carbide particles having an average primary particle diameter of 0.005 µm or more and 5 µm or less.

In the present invention, it is preferable that a thickness of the silicon oxide layer be 0.1 nm or more and 30 nm or less.
In the present invention, it is preferable that a specific surface area of the silicon carbide particles be 1.0 m²/g or more and 400 m²/g or less.
In the present invention, it is preferable that the catalyst be disposed in the exhaust path as a porous layer which includes a plurality of noble metal supporting silicon carbide particles, and a porosity of the porous layer be 20% or more and 90% or less.

### Advantageous Effects of Invention

According to the exhaust emission control device of the internal combustion engine of the present invention, the catalyst which is used contains the silicon carbide particles and includes the silicon oxide layer in which the noble metal particles are supported on the surface of the silicon carbide particles. Therefore, the metal particulates are evenly supported on the surface of the silicon carbide particles, and an effective active point of the catalyst can be secured. Thereby, the catalytic activity at low temperature can be increased even though a large amount of the noble metals is not added.
In addition, since the silicon oxide layer which is formed on the surface of the silicon carbide particles holds the noble metal particles which are the catalyst composition, coarsening (sintering) which is generated due to the fact that the noble metal particles move and are unified at high temperature can be suppressed. In addition, the silicon carbide itself has superior high-temperature durability. Thereby, also in the use in a high temperature environment, a high catalytic performance can be maintained similar to the case of low temperature.
In addition, since the diameter of the silicon carbide particles is the range of 0.005 µm or more and 5 µm or less, the entire catalyst which is disposed in the exhaust path has a high specific surface area, and the exhaust gas can effectively flow into the catalyst. Thereby, contact probability between the exhaust gas and the noble metal particles which are supported on the a surface of the silicon carbide particles is improved, and an excellent catalytic activity is exhibited.
Therefore, the exhaust emission control device of the internal combustion engine having improved exhaust gas purifying characteristic can be obtained, in which the catalytic activity is high at low temperature, and the catalytic activity is not decreased even at high temperature.

In the exhaust emission control device of the internal combustion engine of the present invention, since the silicon oxide layer on the surface of the silicon carbide particles which is contained in the catalyst layer has a thickness in the range of 0.1 nm or more and 30 nm or less, a movement suppression effect and a high temperature durability of the catalytic active species are further improved.

In the exhaust emission control device of the internal combustion engine of the present invention, a specific surface area of the silicon carbide particles which are contained in the catalyst layer is in the range of 1.0 m²/g or more and 400 m²/g or less, and thus the catalyst has a high specific surface area, and many active points of the catalyst can be secured.

In the exhaust emission control device of the internal combustion engine of the present invention, since the catalyst is disposed in the exhaust path as the porous layer which includes the plurality of noble metal supporting silicon carbide particles and the porosity of the porous layer is the range of 20% or more and 90% or less, diffusion of the exhaust gas in the catalyst is sufficiently performed, and the catalyst can be effectively used.

### Brief Description of Drawings

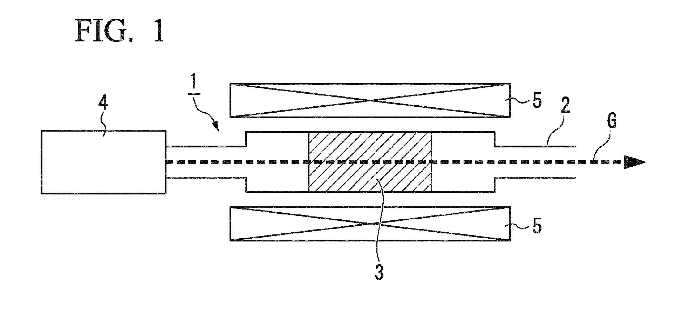

Fig. 1 is an explanatory view of an exhaust emission control device which is used in a test of the Examples.

### Description of Embodiments

Embodiments of an exhaust emission control device of an internal combustion engine of the present invention will be described. In addition, the embodiments are specifically described in order to better understand the gist of the present invention and does not limit the present invention except as otherwise noted.

In the exhaust emission control device of the internal combustion engine of the present embodiment, a catalyst is disposed in an exhaust path, and at least one kind of the catalyst is noble metal supporting silicon carbide particles. For example, the exhaust emission control device of the internal combustion engine of the present embodiment is used in automobiles such as a gasoline-powered vehicle or a diesel engine vehicle. In addition, as long as the catalyst is disposed in the exhaust path, the way of disposing the catalyst is not particularly limited. For example, the catalyst can be supported on a catalyst carrying member such as a honeycomb substrate which is used in automobiles (gasoline-powered vehicles and diesel engine vehicles), or a filter substrate for DPF of a diesel engine vehicle, and can be disposed in the exhaust path.

The noble metal supporting silicon carbide particles which are a material for forming the catalyst are particles which include a silicon oxide layer in which the noble metal particles are supported on the surface of the silicon carbide particles (noble metal supporting silicon carbide particles).
The silicon carbide particles are particles which have an average primary particle diameter of 0.005 µm or more and 5 µm or less. The average primary particle diameter is preferably 0.01 µm or more and 1.5 µm or less, and is more preferably 0.02 µm or more and 1 µm or less. In addition, the average primary particle diameter is most preferably 0.02 µm or more and 0.6 µm or less.
If the particle diameter of the silicon carbide particles is less than 0. 005 µm, sintering of the silicon carbide particles proceeds during a time when the exhaust emission control device is used at high temperature, the specific surface area is decreased, and the catalytic activity is decreased. In addition, when the catalyst is disposed in layers, it is not preferable since there is a concern that the pore formation in the catalyst layer may be difficult. On the other hand, if the particle diameter is more than 5 µm, since the specific surface area of the catalyst is decreased and there is a concern that deterioration of the catalyst composition of the noble metal particles supported on the surface may be generated due to the fact a heat treatment at high temperature is required in the heat treatment at the time of forming the catalyst layer, this also is not preferable.

It is preferable that the silicon oxide layer be generated on the surface of the silicon carbide particles by oxidizing the silicon carbide particles in an oxidizing atmosphere after supporting the noble metal particles on the surface of the silicon carbide particles. Since the silicon oxide layer has a function which holds the noble metal particles on the surface of the silicon carbide particles, movement of the noble metal particles is suppressed under a high temperature environment, and a decrease of the surface area due to the sintering of the noble metal particles can be prevented.
The thickness of the silicon oxide layer formed on the surface of the noble metal supporting silicon carbide particles which is used as the catalyst is preferably 0.1 nm or more and 30 nm or less, is more preferably 0.5 nm or more and 10 nm or less, and is most preferably 0.5 nm or more and 5 nm or less. If the thickness of the silicon oxide layer is less than 0.1 nm, there is a concern that the movement suppression effect and the sintering suppression effect of the noble metal particles may be decreased. In addition, if the thickness of the silicon oxide layer is more than 30 nm, there is a concern that the noble metal practices are coated by the silicon oxide layer and sufficient activity may not be obtained.

In addition, it is preferable that the silicon oxide layer be amorphous. The reason is because amorphous silicon oxide (amorphous silica) easily forms a solid solution with the noble metal and the noble metal particles stably and easily exist on the surface. Thereby, a grain growth due to the sintering of the noble metal particles and the diffusion into the silicon carbide can be prevented, and improved catalytic activity can be achieved even at high temperature. When the silicon oxide layer is crystalline, since it is difficult for the noble metal to form a solid solution, there is a concern that the suppression effect to the sintering of the noble metal may be decreased.

The specific surface area of the silicon carbide particles is preferably 1.0 m²/g or more and 400 m²/g or less, and is more preferably 2 m²/g or more and 200 m²/g or less.
Here, the reason why the specific surface area is 1.0 m²/g or more is that the reactive area as the catalyst is small and it is difficult for the effect to be exhibited if the specific surface area is less than 1.0 m²/g. In addition, the reason why the specific surface area is 400 m²/g or less is that the sintering of the silicon carbide particles is easily generated and the heat-resisting property is decreased if the specific surface area is more than 400 m²/g.

It is preferable that the noble metal particles contain one kind or two or more kinds which are selected from a group including platinum (Pt), gold (Au), silver (Ag), ruthenium (Ru), rhodium (Rh), palladium (Pd), osmium (Os), and iridium (Ir). Among these, the platinum, rhodium, and palladium having high durability at a high temperature region of 700 °C or more are preferable. The noble metal particles may be those which include only one kind of noble metal particles, those which mix two or more kinds of noble metal particles, and noble metal alloy particles which contain two or more kinds of noble metals.

As the disposition method of the catalyst, the noble metal supporting silicon carbide particles may be disposed so as to be distributed on the substrate of the exhaust path, and the noble metal supporting silicon carbide particles may be disposed so as to be an aggregated shape or may be disposed so as to be a structure body having a continuous film shape. In either case, the disposed catalyst is referred to as the catalyst layer. Moreover, other catalyst particles, inorganic particles, or metal particles may be mixed and used in addition to the noble metal supporting silicon carbide particles.
The catalyst is disposed in the exhaust path as a porous layer which includes a plurality of noble metal supporting silicon carbide particles, and porosity of the porous layer is preferably 20% or more and 90% or less. More preferably, the porosity is 30% or more and 80% or less. If the porosity is less than 20%, gas diffusion is not sufficiently performed in the catalyst, and there is a concern that the catalyst which exists on the lower layer of the catalyst layer may not be effectively used. In addition, if the porosity is more than 90%, since the mechanical strength of the catalyst is decreased, there is a concern that deformation of the catalyst layer itself or peeling from the substrate may be generated and the catalytic action may be decreased.
Here, the porous layer includes a porous membrane shape and a porous aggregate.

When the exhaust emission control device of the present embodiment includes the catalyst which is supported in a DPF, it is preferable to form a porous catalyst layer, which contains the silicon carbide including the silicon oxide layer in which the noble metal particles are supported on the surface, on a porous substrate. In this case, the average pore diameter of the porous catalyst layer is preferably more than 0.05 µm and 3 µm or less. More preferably, the average pore diameter is 0.06 µm or more and 3 µm or less, and most preferably, the average pore diameter is 0.1 µm or more and 2.5 µm or less. The average porosity is preferably 50% or more and 90% or less, and is more preferably 60% or more and 85% or less.

A method of manufacturing the exhaust emission control device of the present embodiment will be described.

### (Manufacturing of Silicon Carbide Particle)

First, silicon carbide particles having an average primary particle diameter of 0.005 µm or more and 5 µm or less are prepared.
The method of manufacturing the silicon carbide particles is not particularly limited and may include an industrial method such as an Acheson method, a silica reduction method, and a silicon carbide method.

Particularly, as the method of obtaining nanometer-sized silicon carbide particles, there is a thermal plasma method using a thermal plasma which has high temperature and high activity under a non-oxidizing atmosphere and easily introduces a high-speed cooling process.
This method is a method which reacts silane gas and hydrocarbon gas in thermal plasma and obtains silicon carbide particles, and is useful as the method which manufactures silicon carbide nano-particles having an average particle diameter of approximately 5 nm to 100 nm and improved crystalline structure. Therefore, according to this method, it is possible to obtain the silicon carbide nano-particles having extremely low impurity content by selecting high-purity raw materials.

In addition, there may be a silica precursor calcination method. This method is a method which obtains the silica carbide particles by firing a mixture which includes materials containing silicon such as organic silicone compounds, silicon sol, and silica hydrogel, materials which include carbon such as phenol resin, and a metal compound such as lithium which suppress the grain growth of the silicon carbide, under a non-oxidizing atmosphere.

### (Manufacturing Method 1: Supporting of Noble Metal Particle)

Subsequently, the noble metal particles are supported on the surface of the silicon carbide particles.
The method of supporting the noble metal particles is not particularly limited and can use any method.
For example, a method may be used in which heat treatment of a temperature of 100 °C or more and 250 °C or less is performed after the silicon carbide particles are dispersed in a dispersing liquid including particles of the noble metal compound of one kind or two kinds or more which are selected from a group including platinum, gold, silver, ruthenium, rhodium, palladium, osmium, and iridium and the noble metal is attached to the surface of the silicon carbide particles. Alternatively, a method may be used in which the silicon carbide particles are dispersed in an aqueous solution including a noble metal salt such as a chloride, a sulfide, and a nitrate of the noble metal, the noble metal salt is supported on the surface of the silicon carbide particles, and thereafter, heat treatment of a temperature of 100 °C or more and 250 °C or less is performed.

### (Manufacturing Method 1: Supporting on Substrate)

In this way, after obtaining the silicon carbide particles (silicon carbide particles before forming the silicon oxide layer) of the state where the noble metal particles are only supported before generating the silicon oxide layer on the surface, the silicon carbide particles before forming the silicon oxide layer are dispersed in a dispersing medium and a dispersing liquid is obtained. The dispersing liquid is coated on the substrate such as a honeycomb substrate and the substrate is dried, and the silicon carbide particles before forming the silicon oxide layer are supported on the substrate. Alternatively, the substrate such as the honeycomb substrate is immersed into the dispersing liquid, is dried after being lifted up, and the silicon carbide particles before forming the silicon oxide layer are supported on the substrate.
Thereafter, preferably, the substrate on which the silicon carbide particles before forming the silicon oxide layer are supported is heat-treated preferably at 900°C or more and 2000°C or less, more preferably at 1000°C or more and 1800°C or less under an inert atmosphere such as nitrogen, argon, neon, xenon, and therefore, the silicon carbide particles before forming the silicon oxide layer, which are formed in layers, are partially sintered.
In addition, this heat treatment step may be omitted if there is a capability of generating the silicon oxide layer on the surface of the silicon carbide particles and partially sintering the silicon carbide particles by adjusting the heat treatment condition in the next step, that is, in the silicon oxide layer forming step.

### (Manufacturing Method 1 : Formation of Silicon Oxide Layer)

Thereafter, the substrate on which the partially sintered silicon carbide particles before forming the silicon oxide layer are supported is oxidized at 600°C or more and 1000°C or less, preferably during the processing time of 0.5 hours or more and 36 hours or less, more preferably during the processing time of 4 hours or more and 12 hours or less in an oxidizing atmosphere, and the silicon oxide layer is generated on the surface of the silicon carbide particles. Therefore, the noble metal supporting silicon carbide particles used in the present embodiment are formed, the catalyst of the present embodiment is obtained, and the exhaust emission control device of the present embodiment can be manufactured.

As the oxidizing atmosphere, an atmosphere including oxygen or water may be used, and air, an oxygen atmosphere under decompression, an oxygen atmosphere under compression, or the like may be used. Air is most preferable if considering the economical efficiency.

### (Manufacturing Method 2: Supporting on Substrate)

As another method, the silicon carbide particles are dispersed in a dispersing medium and a dispersing liquid is obtained. The dispersing liquid is coated on the substrate such as a honeycomb substrate and the substrate is dried, and the silicon carbide particles are supported on the substrate. Alternatively, the substrate such as the honeycomb substrate is immersed into the dispersing liquid, is dried after being lifted up, and the silicon carbide particles are supported on the substrate.
Thereafter, preferably, the silicon carbide particles formed in layers are partially sintered by heat-treating the substrate on which the silicon carbide particles are supported preferably at 900°C or more and 2000°C or less, more preferably at 1000°C or more and 1800°C or less under an inert atmosphere such as nitrogen, argon, neon, xenon.

### (Manufacturing Method 2: Supporting of Noble Metal Particles)

The substrate on which the partially sintered silicon carbide particles obtained in this way are supported is immersed into a dispersing liquid including particles of the noble metal compound of one kind or two kinds or more which are selected from a group including platinum, gold, silver, ruthenium, rhodium, palladium, osmium, and iridium, or an aqueous solution including noble metal salts such as a chloride, a sulfide, and a nitrate of a noble metal, the substrate is heat-treated at the temperature of 100°C or more and 250°C or less after being lifted up, and the noble metal is supported on the silicon carbide particles on the substrate. Alternatively, the dispersing liquid or the aqueous solution is coated on the substrate on which the silicon carbide particles are attached, the substrate is heat-treated at the temperature of 100°C or more and 250°C or less, and the noble metal is supported on the silicon carbide particles on the substrate (generation of silicon carbide particles before forming silicon oxide layer).

### (Manufacturing Method 2: Formation of Silicon Oxide Layer)

Thereafter, the substrate on which the silicon carbide particles before forming the silicon oxide layer are supported is oxidized at 600 °C or more and 1000 °C or less, preferably during the processing time of 0.5 hours or more and 36 hours or less, more preferably during the processing time of 4 hours or more and 12 hours or less in an oxidizing atmosphere, and the silicon oxide layer is generated on the surface of the silicon carbide particles. Therefore, the noble metal supporting silicon carbide particles used in the present embodiment are formed, the catalyst of the present embodiment is obtained, and the exhaust emission control device of the present embodiment can be manufactured.

### (Manufacturing Method 3)

Alternatively, after the noble metal particles are supported on the silicon carbide particles, the oxidizing processing is performed preferably during the processing time of 0.5 hours or more and 36 hours or less, more preferably during 4 hours or more and 12 hours or less at 600°C or more and 1000°C or less in the oxidizing atmosphere in a state of the particles, the silicon carbide particles (noble metal supporting silicon carbide particles) on which the silicon oxide layer is formed on the surface are prepared, the catalyst of the present embodiment is obtained by supporting the silicon carbide particles on the substrate such as the honeycomb substrate, and the exhaust emission control device of the present embodiment may be manufactured.
Even in any of the above-described methods, the diameter or the specific surface area of the noble metal supporting silicon carbide particles after the silicon oxide layer is formed on the surface and the noble metal is supported is substantially the same as the diameter or the specific surface area of the silicon carbide particles before forming the silicon oxide layer.

According to the exhaust emission control device of the internal combustion engine of the above-described configuration, due to the fact that the noble metal particles stably exist on the surface of the silicon carbide particles, the noble metal particles easily contact the materials which are included in the exhaust gas. Thereby, the noble metal particulates efficiently react even though the amount of the noble metal element used is small, and it is possible to realize a high catalytic activity as the catalyst at the time of low temperature.
In addition, since the noble metal particles are supported (held) by the silicon oxide layer which is formed on the surface of the silicon carbide particles, the movement of the noble metal particles under a high temperature environment is suppressed, and a decrease in the surface area due to the sintering of the noble metal particles can be prevented. Therefore, it is possible to suppress the decrease of the catalytic activity in the use conditions of high temperature.
Moreover, since the diameter of the silicon carbide particles is 0.005 µm or more and 5 µm or less, the decrease in the specific surface area due to the sintering of the silicon carbide particles is not generated, and the heat treatment at high temperature when forming the catalyst layer is not required. Therefore, the decrease in the catalytic activity or deterioration of the catalyst composition can be suppressed.
Thereby, the exhaust emission control device of the internal combustion engine which disposes the catalyst achieving both high catalytic activity at low temperature and high durability at high temperature can be realized.

As described above, suitable embodiments according to the present invention are described with reference to the accompanying drawings. However, it is needless to say that the present invention is not limited to the embodiments. Various forms of each component shown in the above-described examples, combinations thereof, or the like are examples, and can be changed based on the design requirement or the like within the range which does not depart from the gist of the present invention.

### [Examples]

Hereinafter, the present invention is specifically described according to Examples and Comparative Examples. However, the present invention is not limited to the Examples.

### [Evaluation 1: Physical Properties Evaluation of Exhaust Emission Control Device]

An exhaust emission control device of the internal combustion engine was manufactured like Examples 1 to 5 and Comparative Examples 1 to 3 below. Thereafter, each value of the thickness of the silicon oxide layer, the specific surface area, CO purifying temperature, HC purifying temperature, and porosity of the catalyst layer was measured by the methods listed below, and the evaluation of each device was performed.

### (1) Thickness Measurement of Silicon Oxide Layer

The prepared catalyst layer was cut along with the substrate and observed by a field emission transmission electron microscope (FE-TEM: JEM-2100F made by Japan Electronic Co., Ltd), an ESCA (Electron Spectroscopy for Chemical Analysis) was performed by using an X-ray photoelectric analyzer (Sigma Probe made by VG-Scientific Co.), the composition analysis of the catalyst layer surface was performed by a field emission Auger electron spectrometer (JAMP-9500F made by Japan Electronic Co., Ltd), and the thickness of the silicon oxide layer was measured.

### (2) Measurement of Specific Surface Area

The prepared catalyst layer was cut along with the substrate, the specific surface area was measured by a BET specific surface area measurement device (BELSORP-mini made by Japan BEL Co., Ltd.), and the specific surface area of the catalyst layer was obtained by subtracting the specific surface area corresponding to the substrate weight from the measured specific surface area.

### (3) CO and HC Purifying Test

Simulated exhaust gas shown in Table 1 flowed into the exhaust emission control device, the temperature of the honeycomb or the filter was increased, and purification rates of carbon monoxide and hydrocarbons were measured. The temperature (T50) when 50% of the flowed carbon monoxide or hydrocarbons was purified was measured, and the measured value was set to the index of the purification of the carbon monoxide or the hydrocarbons. The temperature condition was set to a temperature-lowering condition of 17 °C/min from 500°C, and the gas amount was set to 13.5 L/min in a space velocity. In addition, the volume of the filter or the honeycomb was set so that SV was 28000/hour at 29 cc. In addition, the temperature at 10 mm downstream of the filter or the honeycomb was measured.

**Table 1**

| Simulated Exhaust Gas Composition | |
|---|---|
| O₂ | 6% |
| CO₂ | 10% |
| HC(C₃H₆) | 500 ppmC (167 ppm) |
| CO | 1000 ppm |
| NO | 200 ppm |
| H₂O | 7% |
| N₂ | balance |

Fig. 1 shows a device diagram of the exhaust emission control device which is used in the test.
As shown in Fig. 1, the exhaust emission control device 1 of the internal combustion engine, in which the honeycomb or the filter indicated by reference sign 3 was disposed in the inner portion of a tubular exhaust passage 2, was prepared, and a bottle 4 of the simulated exhaust gas was mounted on one end side of the exhaust passage 2. The honeycomb or the filter provided in the exhaust passage 2 could be heated by a heating furnace 5 provided at the outside of the exhaust passage 2, and the temperature thereof could be controlled. The simulated exhaust gas G flowed into the exhaust emission control device 1 from the bottle 4, and the CO and HC purifying test was performed according to the above-described condition.

### [Evaluation 2 : Heat-Resisting Property Evaluation]

The honeycombs or the filters obtained by Examples 1 to 5 and Comparative Examples 1 to 3 were heat-treated at 700°C over 30 hours in the atmosphere. The above-described physical properties evaluation was performed with respect to the exhaust emission control device for the heat-resisting property evaluation in which the heat-treated honeycombs or the filters were disposed in the exhaust path.

### [Evaluation 3: Measurement of Porosity of Catalyst Layer]

The porosity of the catalyst layer formed on the substrate was measured by using a mercury porosimeter (Pore Master 60GT made by Quantachrome Co., Ltd.). In Examples 2 and 4, the average pore diameter was also measured by using the same device. The average pore diameter was set to 50% accumulation of the mercury intrusion volume to the film portion.

### [Example 1]

The silicon carbide particles (average primary particle diameter : 0.02 µm, specific surface area: 86 m²/g) were dispersed in water, and an aqueous solution of chloroplatinic acid was added to the obtained dispersing liquid so that platinum became 0.05 mol with respect to 1 mol of the silicon carbide and these were mixed with each other. The mixture was evaporated and dried by an evaporator and crushed. Thereafter, the crushed mixture was dried at 150°C over 12 hours, and powder in which the platinum was supported on the surface of the silicon carbide particles (powder of silicon carbide particles before forming the silicon oxide layer) was obtained.
Subsequently, the powder was dispersed in pure water along with a carboxylic acid dispersing agent, and dispersing liquid having the solid content concentration of 3 mass % was obtained. After the substrate (4.3 mil/400 cpsi) having a honeycomb structure made of cordierite was immersed into the dispersing liquid, the substrate was dried at 110°C, and the silicon carbide particles before forming the silicon oxide layer were supported on the honeycomb substrate.
Subsequently, the substrate was heat-treated at 1000°C over 1 hour in an argon atmosphere. Then, the silicon oxide layer, in which noble metal particles was supported on the surface of the silicon carbide particles on the honeycomb substrate, was formed by heat-treating the substrate at 800 °C over 4 hours in the atmosphere, and the catalyst layer having the noble metal supporting silicon carbide particles as the material was formed on the honeycomb substrate. The supporting amount of the noble metal on the honeycomb substrate was platinum: 1 g/L per unit volume of the honeycomb substrate.
The honeycomb substrate on which the catalyst layer was formed was disposed in the exhaust path, and the exhaust emission control device of the internal combustion engine of Example 1 was manufactured.

### [Example 2]

The silicon carbide particles (average primary particle diameter : 0.05 µm, specific surface area: 38 m²/g) were dispersed in water, and an aqueous solution of dinitrodiammineplatinum was added to the obtained dispersing liquid so that platinum became 0.005 mol with respect to 1 mol of the silicon carbide and these were mixed with each other. The mixture was evaporated and dried by an evaporator and crushed. Thereafter, the crushed mixture was dried at 150°C over 12 hours, and powder in which the platinum was supported on the surface of the silicon carbide particles (powder of silicon carbide particles before forming the silicon oxide layer) was obtained.
Subsequently, the powder was dispersed in pure water along with a carboxylic acid dispersing agent, and dispersing liquid having the solid content concentration of 8 mass % was obtained. After a DPF porous filter substrate (made of silicon carbide, average pore diameter in partition was 12 µm, and porosity was 45%) was immersed into the dispersing liquid, the substrate was dried at 110°C, and the silicon carbide particles before forming the silicon oxide layer were supported on the DPF porous filter substrate.
Subsequently, the substrate was heat-treated at 1000°C over 1 hour in an argon atmosphere. Then, the silicon oxide layer, in which noble metal particles were supported on the surface of the silicon carbide particles, was formed by heat-treating the substrate at 800 °C over 4 hours in the atmosphere, and the catalyst layer (porous film having average pore diameter of 0.1 µm) having the noble metal supporting silicon carbide particles as the material was formed on the intake side partition of the DPF porous filter substrate. The supporting amount of the noble metal on the filter substrate was platinum: 0.6 g/L per unit volume of the filter substrate.
The DPF porous filter substrate on which the catalyst layer was formed was disposed in the exhaust path, and the exhaust emission control device of the internal combustion engine of Example 2 was manufactured.

### [Example 3]

The silicon carbide particles (average primary particle diameter : 0.5 µm, specific surface area: 4 m²/g) were dispersed in water, and an aqueous solution of chloroplatinic acid was added to the obtained dispersing liquid so that platinum became 0.01 mol with respect to 1 mol of the silicon carbide and these were mixed with each other. The mixture was evaporated and dried by an evaporator and crushed. Thereafter, the crushed mixture was dried at 150°C over 12 hours, and powder in which the platinum was supported on the surface of the silicon carbide particles (powder of silicon carbide particles before forming the silicon oxide layer) was obtained.

Subsequently, the powder was heat-treated at 800°C over 6 hours in the atmosphere, and therefore, the silicon oxide layer in which the noble metal particles was supported on the surface of the silicon carbide particles was formed.
Subsequently, the powder was dispersed in pure water along with a carboxylic acid dispersing agent, and a dispersing liquid having the solid content concentration of 3 mass % was obtained. After the substrate (4.3 mil/400 cpsi) having a honeycomb structure made of cordierite was immersed into the dispersing liquid, the substrate was dried at 110°C. Thereafter, the substrate was heat-treated at 500°C over 2 hours in the atmosphere, and the catalyst layer having the noble metal supporting silicon carbide particles as the material was formed on the honeycomb substrate. The supporting amount of the noble metal on the honeycomb substrate was platinum: 0.9 g/L per unit volume of the honeycomb substrate.
The honeycomb substrate on which the catalyst layer was formed was disposed in the exhaust path, and the exhaust emission control device of the internal combustion engine of Example 3 was manufactured.

### [Example 4]

The silicon carbide particles (average primary particle diameter : 1.2 µm, specific surface area: 2 m²/g) were dispersed in water, and an aqueous solution of chloroplatinic acid was added to the obtained dispersing liquid so that platinum became 0.015 mol with respect to of 1 mol of the silicon carbide and these were mixed with each other. The mixture was evaporated and dried by an evaporator and crushed. Thereafter, the crushed mixture was dried at 150°C over 12 hours, and powder in which the platinum was supported on the surface of the silicon carbide particles (powder of silicon carbide particles before forming the silicon oxide layer) was obtained.
Subsequently, the powder was dispersed in pure water along with a carboxylic acid dispersing agent, and dispersing liquid having the solid content concentration of 7 mass % was obtained. After a DPF porous filter substrate (made of silicon carbide, average pore diameter in partition was 12 µm, and porosity was 45%) was immersed into the dispersing liquid, the substrate was dried at 130°C, and the silicon carbide particles before forming the silicon oxide layer were supported on the filter substrate.
Subsequently, the substrate was heat-treated at 800°C over 10 hours in the atmosphere, the silicon oxide layer on which noble metal particles was supported was formed on the surface of the silicon carbide particles, and the catalyst layer (porous film having an average pore diameter of 0.6 µm) having the noble metal supporting silicon carbide particles as the material was formed on the intake side partition of the DPF porous filter substrate. The supporting amount of the noble metal on the filter substrate was platinum: 0.9 g/L per unit volume of the filter substrate.
The DPF porous filter substrate on which the catalyst layer was formed was disposed in the exhaust path, and the exhaust emission control device of the internal combustion engine of Example 4 was manufactured.

### [Example 5]

The silicon carbide particles (average primary particle diameter : 0.05 µm, specific surface area: 39 m²/g) were dispersed in water, and an aqueous solution of dinitrodiamminepalladium was added to the obtained dispersing liquid so that palladium became 0.02 mol with respect to 1 mol of the silicon carbide and these were mixed with each other. The mixture was evaporated and dried by an evaporator and crushed. Thereafter, the crushed mixture was dried at 150°C over 12 hours, and powder (powder of silicon carbide particles before forming the silicon oxide layer) in which the palladium was supported on the surface of the silicon carbide particles was obtained.
Subsequently, the powder was dispersed in pure water along with a carboxylic acid dispersing agent, and dispersing liquid having the solid content concentration of 6 mass % was obtained. After the substrate (4.3 mil/400 cpsi) having a honeycomb structure made of cordierite was immersed into the dispersing liquid, the substrate was dried at 110°C, and the silicon carbide particles before forming the silicon oxide layer were supported on the honeycomb substrate.
Subsequently, the substrate was heat-treated at 1000°C over 1 hour in an argon atmosphere. Then, the silicon oxide layer, in which noble metal particles were supported on the surface of the silicon carbide particles on the honeycomb substrate, was formed by heat-treating the substrate at 800 °C over 4 hours in the atmosphere, and the catalyst layer having the noble metal supporting silicon carbide particles as the material was formed on the honeycomb substrate. The supporting amount of the noble metal on the honeycomb substrate was palladium: 0.9 g/L per unit volume of the honeycomb substrate.
The honeycomb substrate on which the catalyst layer was formed was disposed in the exhaust path, and the exhaust emission control device of the internal combustion engine of Example 5 was manufactured.

### [Comparative Example 1]

The silicon carbide particles (average primary particle diameter : 1.2 µm, specific surface area: 2 m²/g) was dispersed in pure water along with a carboxylic acid dispersing agent, and a dispersing liquid having the solid content concentration of 10 mass % was obtained. After the substrate (4.3 mil/400 cpsi) having a honeycomb structure made of cordierite was immersed into the dispersing liquid, the substrate was dried at 110°C, and the silicon carbide particles were supported on the honeycomb substrate.
Subsequently, the substrate was heat-treated at 1000°C over 1 hour in an argon atmosphere, and therefore, the catalyst layer having the silicon carbide particles as the material was formed on the honeycomb substrate. The obtained honeycomb was disposed in the exhaust path, and the exhaust emission control device of the internal combustion engine of Comparative Example 1 was manufactured.

### [Comparative Example 2]

γ-alumina having a specific surface area of 253 m²/g, water, dinitrodiammineplatinum acid solution, and alumina sol (Alumina Sol 520 made by Nissan Chemical Industries, Inc.) each were weighed so that the weight ratio of γ-alumina:water:platinum:alumina in sol =26:100:1:3 and mixed with one another. The mixture was pulverized in a ball mill over 12 hours, and the dispersing liquid was obtained.
Subsequently, after the substrate (4.3 mil/400 cpsi) having a honeycomb structure made of cordierite was immersed into the dispersing liquid, the substrate was dried. Then, the substrate was heat-treated at 600°C over 2 hours in the atmosphere, and therefore, alumina: 29 g/L and platinum: 1 g/L per unit volume of the honeycomb substrate were supported on the honeycomb substrate.
The obtained honeycomb was disposed in the exhaust path, and the exhaust emission control device of the internal combustion engine of Comparative Example 2 was manufactured.

### [Comparative Example 3]

Lanthanum nitrate, manganese nitrate, and citric acid were measured so as to have a mole ratio of 1:1:40, water was added to these after these were mixed in a ball mill at 50°C over 15 minutes, and these were dried. Subsequently, the obtained solid was fired at 250°C over 30 minutes, at 300°C over 30 minutes, and at 350°C over 1 hour. Subsequently, after the obtained powder was dry-pulverized for 15 minutes, the pulverized powder was fired at 800°C over 1 hour, and powder of a complex oxide denoted by LaMnO₃ was obtained.
The powder of the complex oxide, water, dinitrodiammineplatinum acid solution, and alumina sol (Alumina Sol 520 made by Nissan Chemical Industries, Inc.) each were weighed so that the weight ratio of complex oxide:water:platinum:alumina in sol =26:100:1:3 and mixed with one another. The mixture was pulverized in a ball mill over 12 hours, and the dispersing liquid was obtained.
Subsequently, after the substrate (4.3 mil/400 cpsi) having a honeycomb structure made of cordierite was immersed into the dispersing liquid, the substrate was dried. Then, the substrate was heat-treated at 600°C over 2 hours in the atmosphere, and therefore, LaMnO₃: 29 g/L and platinum: 1 g/L per unit volume of the honeycomb substrate were supported on the honeycomb substrate.
The obtained honeycomb was disposed in the exhaust path, and the exhaust emission control device of the internal combustion engine of Comparative Example 3 was manufactured.

With respect to the above-described Examples and Comparative Examples, evaluation results of the obtained exhaust emission controls devices are shown in table 2.

**Table 2**

| | Material Composition | Pt Amount (g/L) | SiO₂ Film Thickness (nm) | Initial | | | After Heat Treatment at 700°C over 30 hours | | | Porosity (%) |
|---|---|---|---|---|---|---|---|---|---|---|
| | | | | Specific Surface Area (m²/g) | CO T50 (°C) | C₃H₆ T50 (°C) | Specific Surface Area (m²/g) | CO T50 (°C) | C₃H₆ T50 (°C) | |
| Example 1 | (SiC+SiO₂)-Pt | 1 | 4 | 86 | 168 | 185 | 82 | 184 | 201 | 84 |
| Example 2 | (SiC+SiO₂)-Pt | 0.6 | 1 | 38 | 165 | 182 | 36 | 179 | 197 | 78 |
| Example 3 | (SiC+SiO₂)-Pt | 0.9 | 3 | 4 | 172 | 190 | 4 | 186 | 207 | 69 |
| Example 4 | (SiC+SiO₂)-Pt | 0.9 | 6 | 2 | 172 | 189 | 2 | 182 | 199 | 68 |
| Example 5 | (SiC+SiO₂)-Pd | 0.9 | 3 | 39 | 211 | 230 | 32 | 212 | 230 | 76 |
| Comparative Example 1 | SiC | - | - | 2 | 500 or more | 500 or more | 2 | 500 or more | 500 or more | 43 |
| Comparative Example 2 | γ-Al₂O₃-Pt | 1 | - | 253 | 221 | 237 | 118 | 271 | 282 | 88 |
| Comparative Example 3 | LaMnO₃-Pt | 1 | - | 8 | 250 | 282 | 5 | 262 | 298 | 39 |

In all Examples 1 to 5, the silicon oxide layer formed on the surface of the silicon carbide particles was amorphous. In addition, 50% purifying temperature of CO and HC was lower in all exhaust emission control devices, the purifying temperature was hardly changed even after the heat treatment at 700°C over 30 hours, and the exhaust emission control device having improved high temperature durability could be obtained.
On the other hand, in Comparative Example 1, the silicon oxide layer was not formed on the surface of the silicon carbide particles.
In addition, since the noble metal was not supported in Comparative Example 1, a catalytic effect could hardly be obtained.
In Comparative Example 2, compared to Examples, the 50% purifying temperature of CO and HC was higher, the purifying temperature after the heat treatment at 700°C over 30 hours was greatly changed and became higher, and the high temperature durability was deteriorated.
In Comparative Example 3, compared to Comparative Example 2, the change of the 50% purifying temperature of CO and HC after the heat treatment at 700°C over 30 hours was smaller. However, the initial purifying temperature was higher and the catalytic activity was lower.

According to the above-described results, the exhaust emission control device of the internal combustion engine of the present embodiment was confirmed to achieve both high catalytic activity at low temperature and high durability at high temperature, and the usefulness of the present invention was confirmed.

### Industrial Applicability

In the exhaust emission control device of the internal combustion engine of the present invention, since the catalytic activity is high at low temperature and the catalytic activity is not decreased even when the control device is subjected to high temperature, the exhaust emission control device of the internal combustion engine having improved exhaust gas purification characteristic can be obtained.

### Reference Signs List

1: exhaust emission control device of internal combustion engine, 2: exhaust passage, 3: honeycomb or filter, 4: bottle, 5: heating furnace, G: simulated exhaust gas

## Claims

1. An exhaust emission control device of an internal combustion engine,
wherein a catalyst is disposed in an exhaust path of the internal combustion engine,
at least one kind of the catalyst is noble metal carrying silicon carbide particles, and
the noble metal carrying silicon carbide particles include a silicon oxide layer in which noble metal particles are carried on a surface of silicon carbide particles having an average primary particle diameter of 0.005 µm or more and 5 µm or less.

2. The exhaust emission control device of an internal combustion engine according to claim 1,
wherein a thickness of the silicon oxide layer be 0.1 nm or more and 30 nm or less.

3. The exhaust emission control device of an internal combustion engine according to claim 1 or 2,
wherein a specific surface area of the silicon carbide particles be 1.0 m²/g or more and 400 m²/g or less.

4. The exhaust emission control device of an internal combustion engine according to any one of claims 1 to 3,
wherein the catalyst be disposed in the exhaust path as a porous layer which includes a plurality of noble metal carrying silicon carbide particles, and
a porosity of the porous layer be 20% or more and 90% or less.
